# EUROPEAN PATENT APPLICATION

(11) **EP 4 624 270 A1**
(43) Date of publication of application: **01.10.2025**
(21) Application number: 25156290.6
(22) Date of filing: 06.02.2025
(51) Int. Cl.: B60R 16/033, B60R 16/02, B60L 3/00, B60L 1/00, B60K 1/00, B60K 6/00, B60K 6/40, B60K 6/405, B60K 6/48, H02K 1/00, H02K 7/00

(54) **VEHICLE POWERTRAIN STRUCTURE**

(30) Priority: 28.03.2024 JP 2024054354
(71) Applicant: MAZDA MOTOR CORPORATION, Hiroshima 730-8670 (JP)
(72) Inventor: Sugimoto, Manabu, Aki-gun, Hiroshima, 730-8670 (JP)
(74) Representative: Thoma, Michael

(57) **Abstract**

[Problem] To provide a vehicle powertrain structure capable of ensuring safety during a vehicle collision.

[Solution] A vehicle includes a drive system, a battery, and an inverter. The drive system has a motor M for travel of the vehicle and a motor housing 510 formed of a conductive material. A DC connector CN8, to which a wire extending from the battery is connected, is disposed in a rear wall portion 510d of a battery housing 510. The motor housing 510 accommodates a DC bus bars LN2 that connects the DC connector CN8 and a circuit section of an inverter and an auxiliary machine wire LN3 that connects between the DC connector CN8 and an electric compressor mounted on the vehicle. A junction box in which the auxiliary machine wire LN3 is branched from the DC bus bars LN2 is arranged in a rear space 510b behind a motor accommodation space 510a that accommodates a stator 514 and a rotor of a motor M.

## Description

### [Technical Field]

The present invention relates to a vehicle powertrain structure and, in particularly, to a powertrain structure that has a power supply path through which electric power from a battery is supplied to a motor and an auxiliary machine.

### [Background Art]

In recent years, vehicles that include a motor as a drive source for travel have been increasing. A battery for supplying electric power to the motor is mounted on such vehicles. In JP 607 044 4 B2, a drive system for a vehicle that includes the motor as the drive source for travel is disclosed.

The vehicle drive system disclosed in JP 607 044 4 B2 includes: the motor as the drive source for travel; a case that accommodates the motor; and an electric pump that is accommodated in the case together with the motor. For the vehicle drive system disclosed in Patent Literature 1, such a configuration is adopted that an opening is provided in an upper portion of the case and that the opening is closed by a lid body.

In the vehicle drive system disclosed in JP 607 044 4 B2, the lid body is provided with a power supply connector that is used for connection with the battery. In the case, a wire that is connected to the power supply connector is branched. One of the branched wires is connected to the motor via a first inverter. The other of the branched wires is connected to an electric motor of an electric pump via a second inverter.

### [Citation List]

### [Patent Literature]

[Patent Literature 1] Japanese Patent No. 6,070,444

### [Summary of Invention]

### [Technical Problem]

However, it is considered to be difficult to ensure safety during a vehicle collision with the technique disclosed in JP 607 044 4 B2. More specifically, in the vehicle drive system disclosed in JP 607 044 4 B2, the power supply connector is provided to the lid body, which is disposed in the upper portion of the case, and the drive system is connected to the battery via the power supply connector. The battery that is connected to the motor for travel of the vehicle outputs electric power at a higher voltage than the electric power output by a lead battery, which has conventionally been used, and the like. Depending on a wiring form for the power supply, the connector, and the wires connected thereto, the power supply connector and the wire connected thereto are easily damaged during the vehicle collision. Thus, it is difficult to ensure safety with the vehicle drive system disclosed in JP 607 044 4 B2. In addition, a DC wire on the outside of the case tends to be elongated.

The invention has been made to solve the problem as described above and therefore has a purpose of providing a vehicle powertrain structure capable of ensuring safety during a vehicle collision.

### [Solution to Problem]

A vehicle powertrain structure according to an aspect of the invention includes: a drive system to be mounted in a front portion of a vehicle and has a motor and a drive system housing, the motor being a drive source for travel of the vehicle, and the drive system housing at least accommodating the motor; a battery as a power source of the motor; and a power converter that is mounted in the front portion of the vehicle and has a circuit section and a converter housing, the circuit section converting electric power between the motor and the battery, and the converter housing accommodating the circuit section. An auxiliary machine that is actuated by the electric power from the battery is mounted on the vehicle. In addition, in the vehicle powertrain structure according to this aspect, the converter housing is closely joined to the drive system housing or integrally provided with the drive system housing, a power supply connector, to which a wire extending from the battery is connected, is disposed in a rear wall portion of the drive system housing, inside the drive system housing, a converter wire for connecting the power supply connector and the circuit section and an auxiliary machine wire for connecting the power supply connector and the auxiliary machine are accommodated. A branch portion in which the auxiliary machine wire is branched from the converter wire is arranged in a portion of the drive system housing behind the motor.

The drive system is mounted in the front portion of the vehicle, and the power supply connector is disposed in a wall portion on a rear side (rear side in a vehicle front-rear direction) in the drive system housing. Accordingly, even when an obstacle enters the portion, in which the drive system is mounted, in the front portion of the vehicle even during a frontal collision of the vehicle, it is possible to suppress the power supply connector from being damaged by the obstacle, a member of the vehicle that is pushed by the obstacle and moves rearward, or the like. That is, the drive system housing, which accommodates the motor and the like, has relatively high rigidity, and thus functions as a protection member that protects the power supply connector during the frontal collision.

The converter wire and the auxiliary machine wire are accommodated in the drive system housing, and the branch portion is arranged in the portion behind the motor in the drive system housing. Accordingly, even during the frontal collision of the vehicle, the drive system housing and the motor (a stator and a rotor) each function as a protection member that protects the converter wire, the auxiliary machine wire, and the branch portion.

Thus, the vehicle powertrain structure can ensure safety during the vehicle collision. In addition, compared to a case where the converter wire, the auxiliary machine wire, and the branch portion are provided outside the drive system housing, it is possible to reduce necessity of securing a space for preventing damage thereto due to the collision with a peripheral member or a vehicle body or a space for arranging a protector therefor.

In the above description, "closely joined" indicates that, even in the case where a minute clearance is provided in a joined portion between the drive system housing and the converter housing, an electromagnetic wave does not enter/exit through a clearance.

In addition, "power conversion" that is executed by the circuit section of the power converter indicates that at least one variable such as a voltage, a current, a frequency, a phase, or the number of the phases as a variable of electric power is converted into another form. For example, "power conversion" indicates conversion between DC power and AC power, conversion to increase/reduce the voltage, or the like.

In a second aspect of the present disclosure, the auxiliary machine wire may be formed such that a transverse cross-sectional area of a conductive portion is smaller than a transverse cross-sectional area of a conductive portion in the converter wire.

Since the auxiliary machine wire may be formed such that the cross-sectional area of the conductive portion in the auxiliary machine wire is smaller than the cross-sectional area of the conductive portion in the converter wire, it is possible to reduce an occupied space in a case where the auxiliary machine wire is routed in the drive system housing. Thus, it is possible to suppress enlargement of the drive system housing.

The battery may be mounted on a rear side of the drive system in the vehicle.

Since the battery may be mounted on the rear side of the drive system in the vehicle, it is possible to suppress a length of a wire for connecting the battery to the power supply connector, which is disposed in the rear wall portion of the drive system housing, to be small. Thus, it is possible to suppress electrical resistance between the battery and the power converter and between the battery and the auxiliary machine to be small.

In addition, since it is possible to suppress the length of the wire for connecting the power supply connector and the battery, it is possible to reduce a space for routing the wire and to cut manufacturing cost.

The vehicle may include an output shaft that transmits a driving force for travel output from a powertrain including the motor to wheels, the output shaft may be disposed to be inserted through a portion behind the motor in the drive system housing in a vehicle width direction, and the branch portion may be arranged at a position near the output shaft, and is arranged at the same position as a rear end of an outer periphery of the output shaft in a front-rear direction or on a front side of the rear end.

The branch portion may be arranged near the output shaft, and may be arranged at the same position as the rear end of the output shaft in the front-rear direction or in front of the rear end. In particular, the branch portion may be arranged between the front end and the rear end of the output shaft or between the middle part and the rear part of the output shaft. Thus, it is possible to suppress the branch portion from being damaged by the rear-wall portion or the peripheral member in the drive system housing during the frontal collision of the vehicle. That is, since the output shaft has the relatively high rigidity, the output shaft functions as the protection member that protects the branch portion during the frontal collision.

Furthermore, a portion, in which the motor is accommodated, in the drive system housing may be configured to have two housing elements, each of which has a dish, concave or bowl-likeshape, and to join opening edges of the two housing elements, in a direction orthogonal to a rotational shaft of the motor, one housing element of the two housing elements may be formed to have a larger diameter than the other housing element, and the converter housing may separately be provided from the drive system housing, may be adjacent to the one housing element in the vehicle width direction, and may be placed on the other housing element.

Since the converter housing may be placed on the other housing element having the small diameter and is arranged adjacent to the one housing element having the large diameter in the vehicle width direction, the converter housing is arranged by using a step portion between the one housing element and the other housing element having the different diameter sizes. Thus, in the vehicle powertrain structure according to the above aspect, it is possible to suppress enlargement of the entire powertrain by effective use of the space.

A DC connection portion with the power converter may be provided in a rear portion of the one housing element, an AC connection portion with the power converter may be provided in a front portion thereof, a motor connection wire for connecting the AC connection portion and the motor may be accommodated in an inner space, and the auxiliary machine wire may extend forward from the branch portion through the one housing element and may be routed to provide a grade separated crossing over the motor connection wire while being electrically insulated.

The auxiliary machine wire may extend forward in the one housing element and may provide the grade separated crossing over the motor connection wire while being electrically insulated. Accordingly, in the vehicle powertrain structure according to the above aspect, the branch portion may be protected against the frontal collision by arranging the branch portion on the rear side, and the auxiliary machine wire can be routed to the front of the motor connection wire by providing the grade separated crossing over the motor connection wire. Thus, in the vehicle powertrain structure according to the above aspect, it is possible to route the auxiliary machine wire to the front of the motor connection wire with a high degree of freedom while protecting the branch portion.

According to another aspect of the present disclosure, the auxiliary machine wire may be formed of a coated wire.

Since the auxiliary machine wire is configured by the coated wire, it is possible to route the auxiliary machine wire with a high degree of freedom in terms of a layout while a short circuit with the other member in the drive system housing is prevented.

According to another aspect of the present disclosure, the drive system housing and the converter housing may each be formed by using a conductive and/or electromagnetically shielding material, and a noise filter component may be inserted in a portion on a side of the circuit section from the branch portion in the converter wire.

Since the noise filter component is inserted in the converter wire, it is possible to prevent noise generated in the power converter from being leaked to the wire on the power supply connector side from the noise filter component in the converter wire and on the battery side from the power supply connector (an electromagnetic interference (EMI) measure). In addition, also in the case where the noise from another device is transmitted to the wire from the battery to the power supply connector, interference of the noise with driving of the power converter is prevented (an electromagnetic susceptibility (EMS) measure).

Since the converter wire may be accommodated in the drive system housing formed of the conductive material, it is possible to prevent the electromagnetic wave from being radiated to the outside of the housing from the power converter side of the noise filter component in the converter wire, and to prevent interference of the electromagnetic wave with the converter wire from the outside of the drive system housing. In this way, an electromagnetic compatibility measure (EMS) is established.

Since the noise filter component may be inserted on the power converter side of the branch portion in which the auxiliary machine wire is branched, it is possible to prevent the noise generated in the power converter from being transmitted to the auxiliary machine wire. In addition, since the auxiliary machine wire is also accommodated in the drive system housing, it is also possible to prevent the noise from the other device from being transmitted to the auxiliary machine wire from the outside of the housing. Thus, in the vehicle powertrain structure according to the above aspect, it is possible to protect the power supply connector and the branch portion during the frontal collision and establish the EMC measure at the same time.

Advantageously, the converter wire may be routed in a meandering pattern in the vehicle width direction.

Furthermore, the vehicle powertrain structure may further comprise a bumper reinforcement disposed on the front side of the powertrain room extending in the vehicle width direction, and a front side frame disposed on each lateral side of the powertrain room connected to said bumper reinforcement.

According to another aspect, the vehicle powertrain structure may further comprise an axle housing accommodating a transmission, wherein a front end portion of the converter housing may be arranged at a position behind a front end portion of the one housing element and a front end portion of the axle housing, and the front end portion of the converter housing may be arranged at a position that is substantially flush with the front end portion of the other housing element.

Furthermore, a rear end portion of the converter housing may be formed in a tapered shape.

Advantageously, the converter housing may comprise a DC connector in a rear portion and an AC connector in a front portion thereof. The connectors, namely DC connectors and AC connectors, may be joined by slidingly moving the converter housing with respect to the motor housing in the vehicle width direction.

According to another aspect, the auxiliary machine may be located on the front side of the drive system housing.

The present invention further relates to a vehicle such as an automobile, comprising the vehicle powertrain structure according to any of the preceding claims.

### [Advantageous Effects of Invention]

It is possible to ensure the safety during the vehicle collision with the vehicle powertrain structure according to each of the above aspects.

### [Brief Description of Drawings]

[FIG. 1] FIG. 1 is a view illustrating a schematic configuration of a vehicle on which a powertrain according to an embodiment is mounted.
[FIG. 2] FIG. 2 is a front view in which the powertrain is seen from the front.
[FIG. 3] FIG. 3 is a view illustrating a power supply path from a battery.
[FIG. 4] FIG. 4 is a left view of a configuration inside a motor housing that is seen from an engine side.
[FIG. 5] FIG. 5 is an enlarged view of section A1 in FIG. 4.
[FIG. 6] FIG. 6 includes views illustrating section A2 in FIG. 4, in which FIG. 6A is a front view, and FIG. 6B is a right view.
[FIG. 7] FIG. 7A is a partial cross-sectional view illustrating a branched wire, and FIG. 7B is a partial cross-sectional view illustrating a DC bus bar.
[FIG. 8] FIG. 8 is a plan view in which an inverter is seen from above.
[FIG. 9] FIG. 9 includes views illustrating a configuration of the inverter, in which FIG. 9A is a plan view, and FIG. 9B is a right view.
[FIG. 10] FIG. 10 includes views illustrating a posture change of the inverter during an offset collision, in which FIG. 10A illustrates a posture before the collision and FIG. 10B illustrates the posture after the collision.

### [Description of Embodiments]

A description will hereinafter be made on an embodiment of the invention with reference to the drawings. The invention will be exemplified in the embodiment described below, and the invention is not limited to the following embodiment except for an essential configuration thereof.

In the drawings used in the following description, "FR" indicates a vehicle front direction, "RR" indicates a vehicle rear direction, "LH" indicates a vehicle left direction, "RH" indicates a vehicle right direction, "UP" indicates a vehicle up direction, and "LO" indicates a vehicle down direction.

### 1. Configuration of Vehicle V

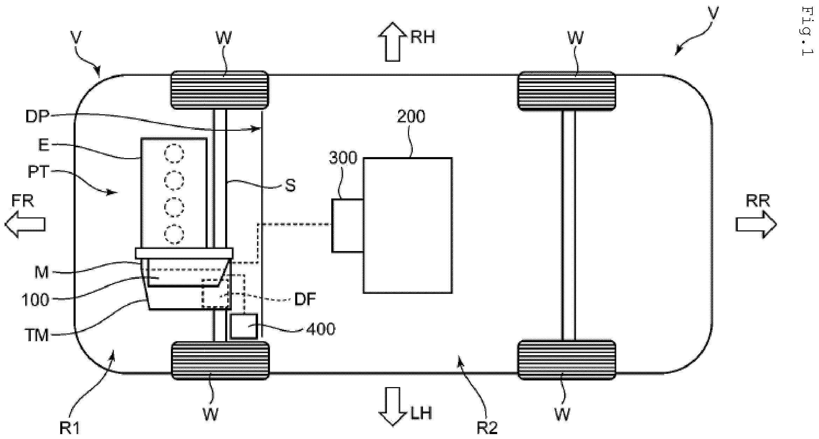

A description will be made on a configuration of a vehicle V according to the embodiment of the invention with reference to FIG. 1.

As illustrated in FIG. 1, in the vehicle V, a powertrain PT that includes an inverter (power converter) 100 may be mounted in a front powertrain room R1.

The vehicle V may be a so-called hybrid electric vehicle (HEV). An engine E and a motor M as drive sources for travel (that is, drive sources for wheels W) may be mounted on the vehicle V. The powertrain PT may include a transmission TM in addition to the engine E and the motor M.

The motor M may be a three-phase three-wire AC motor that is rotated when being supplied with three-phase AC power, and may include: a rotational shaft; a rotor that has a permanent magnet disposed around the rotational shaft; and a stator that is disposed on an outer periphery of the rotor and in which a coil is wound around each of plural teeth. The plural coils may include a U-phase coil, a V-phase coil, and a W-phase coil, and currents in mutually different phases are supplied to the coils of the respective phases.

The transmission TM may be connected to the motor M and may decelerate the rotation that is input from the motor M. The transmission TM is integrated with a differential gear DF. In this way, the rotation that is input to the transmission TM is output to a driveshaft (output shaft) S via the differential gear DF and is transmitted to the wheels W.

The vehicle V may be a parallel hybrid electric vehicle as an example, and can travel by using only a driving force of the motor M, can travel by using the driving forces of both of the motor M and the engine E, and can travel by using only the driving force of the engine E. The vehicle V may perform deceleration regeneration, and the motor M generates the electric power by using a transmission force from the wheels W during deceleration of the vehicle V.

A battery 200 may be mounted behind the powertrain PT, more specifically, under a floor of a cabin R2. The battery 200 exchanges the electric power with the motor M. When the motor M is driven as the drive source for travel, the battery 200 supplies the electric power to the motor M. In this case, DC power is supplied to the motor M via a DC/DC converter 300 that is provided in a power supply path between the battery 200 and the motor M.

Meanwhile, when the motor M is driven as a generator during the deceleration of the vehicle V, the battery 200 stores the electric power that is generated by the motor M.

The inverter 100 may be connected to the three-phase three-wire motor M. The inverter 100 may be a power converter that converts the DC power from the battery 200 into AC power and supplies the AC power to the motor M. More specifically, the inverter 100 converts the DC power, which is supplied from the battery 200 via a DC circuit including the DC/DC converter 300, into three-phase AC power, and supplies the three-phase AC power to the motor M.

In the case where the motor M is driven as the generator during the deceleration of the vehicle V, the inverter 100 converts the AC power, which is generated by the motor M, into the DC power and supplies the DC power to the battery 200 via the DC circuit including the DC/DC converter 300.

Although not illustrated in FIG. 1, the vehicle V may also includes a low-voltage battery for supplying the electric power to an electrical component provided in each portion of the vehicle V. The low-voltage battery is a battery, a nominal voltage of which is lower than that of the battery 200.

Here, the battery 200 may be a lithium-ion battery or a nickel-metal hydride battery, a nominal voltage of which is 24 V or higher, for example. The low-voltage battery is a lead battery or a lithium-ion battery, a nominal voltage of which is 12 V or 24 V, for example.

A powertrain control module (PCM) 400 may also be mounted on the vehicle V, and the PCM 400 is a controller that comprehensively controls the powertrain PT including the motor M and the engine E.

### 2. Arrangement of Each Portion in Powertrain PT

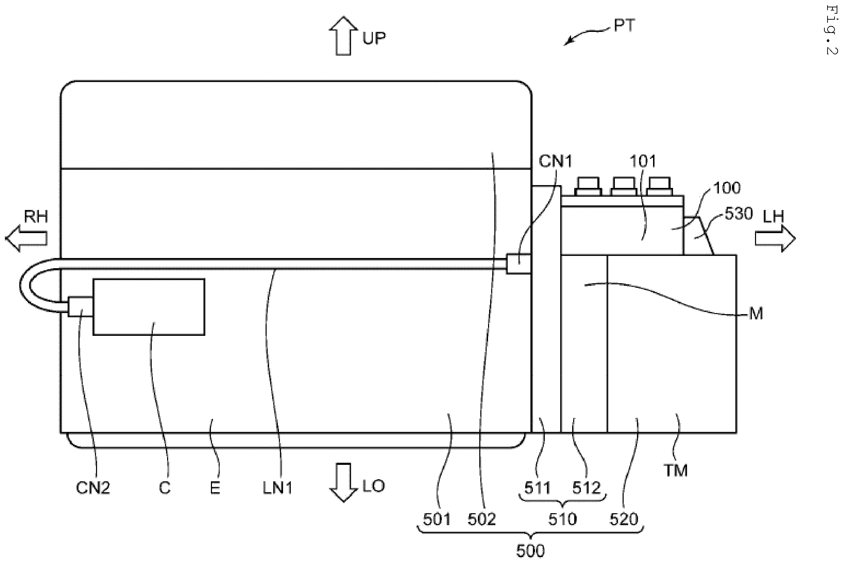

A description will be made on arrangement of each portion in the powertrain PT with reference to FIG. 2. FIG. 2 is a front view in which the powertrain PT is seen from the front of the vehicle V.

As illustrated in FIG. 2, the engine E, the motor M, and the transmission TM may sequentially be arranged from right to left in the powertrain room R1. The engine E may have: a cylinder block 501 that constitutes a lower portion of the engine; and a cylinder head 502 that is arranged on the cylinder block 501.

The motor M on the left side may be arranged adjacent to the cylinder block 501 of the engine E, and is accommodated in a motor housing 510 that may be configured by a first motor housing (one housing element) 511 and a second motor housing (the other housing element) 512. The first motor housing 511 and the second motor housing 512 may each have a dish shape (a shallow dish shape or a deep dish shape), and may constitute the motor housing 510 by joining opening edges thereof.

Here, although the motor M that is accommodated in the motor housing 510 is not illustrated in FIG. 2, a rotational shaft of the motor M may be arranged to extend along a vehicle width direction. In a direction that is orthogonal to the extending direction of the rotational shaft of the motor M (the vehicle width direction), the first motor housing 511 may be formed to have a larger diameter than the second motor housing 512.

The first motor housing 511 and the second motor housing 512 may each be formed by using a conductive material (for example, a metallic material or a carbon fiber reinforced resin).

The transmission TM may have an axle housing 520 as an outer shell. The axle housing 520 may be joined (fastened) to a left portion of the second motor housing 512 in the motor housing 510 without a clearance therebetween. The axle housing 520 may accommodate a transmission mechanism that constitutes the transmission TM and a gear mechanism that constitutes the differential gear DF. The axle housing 520 may be formed by using the conductive material (for example, the metallic material or the carbon fiber reinforced resin).

In the powertrain PT, a drive system housing 500 may be configured by combining the cylinder block 501, the cylinder head 502, the motor housing 510, and the axle housing 520.

In the vehicle width direction of the vehicle V, the inverter 100 may be disposed by using a step portion between the first motor housing 511 and the second motor housing 512. More specifically, the inverter 100 may be arranged on the left side adjacent to the first motor housing 511 and is arranged in a portion extending from an upper portion of the second motor housing 512 to an upper portion of the axle housing 520. The inverter 100 may be connected by joining a connector (not illustrated in FIG. 2) that is formed in the first motor housing 511 to a connector (not illustrated in FIG. 2) of the inverter 100. The connectors may be joined to each other by slidingly moving the inverter 100 in the right direction with respect to the first motor housing 511.

In addition, the inverter 100 has an inverter housing (converter housing) 101 that constitutes an outer shell. The inverter housing 101 may be fixed to the axle housing 520 via a bracket 530.

An electric compressor (auxiliary machine) C for an air conditioner is also mounted in the powertrain room R1 (see FIG. 1) of the vehicle V. The electric compressor C is supplied with the DC power from the battery 200 (see FIG. 1) via a power line harness LN1. The electric compressor C may be arranged in a front portion of the cylinder block 501. On the outside of the cylinder block 501, the power line harness LN1 may be routed to extend in the vehicle width direction along a front wall, may be connected to a DC circuit in the drive system housing 500 by a connector CN1 connected at one end, and may be connected to the electric compressor C by a connector CN2 connected to the other end.

### 3. Electrical Connection Among Battery 200, Powertrain PT, and Electric compressor C

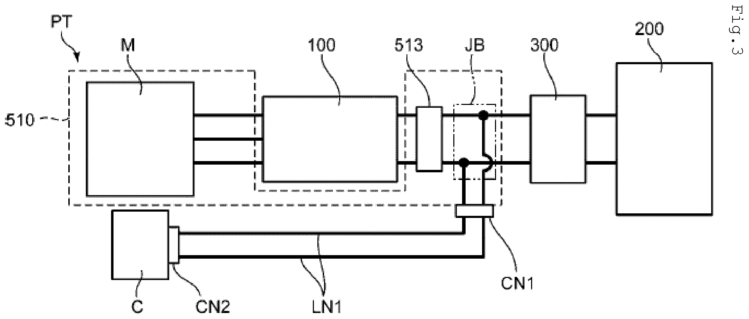

A description will be made on electrical connection among the battery 200, the powertrain PT, and the electric compressor C with reference to FIG. 3.

As illustrated in FIG. 3, the battery 200 may be connected to the powertrain PT via the DC/DC converter 300. The powertrain PT may comprise the motor M and a ferrite core (noise filter component) 513 that is accommodated in the motor housing 510. The motor M may be connected to the inverter 100 by an AC wire. The inverter 100 may be connected to the battery 200 via the DC/DC converter 300 by a DC wire.

The DC wire for connecting the inverter 100 and the battery 200 may be provided with a junction box (branch portion) JB at which the DC wire (auxiliary machine wire) connected to the connector CN1 is branched. As described above, the power line harness LN1 may be connected to the connector CN1. The power line harness LN1 may be connected to the electric compressor C via the connector CN2.

The DC power from the battery 200 may be supplied to the inverter 100 via the DC/DC converter 300, is then converted into the AC power, and is supplied to the motor M. During deceleration of the vehicle V, the AC power, which is generated by the motor M, is converted into the DC power by the inverter 100 and supplied to the battery 200 via the DC/DC converter 300.

Meanwhile, the electric compressor C may be supplied with the DC power, which is supplied from the battery 200 via the DC/DC converter 300, via the junction box JB. The junction box JB may be disposed on the battery 200 side from the ferrite core 513 in the DC wire for connecting the inverter 100 and the battery 200.

### 4. Routing Form of Each Wire in Motor Housing 510

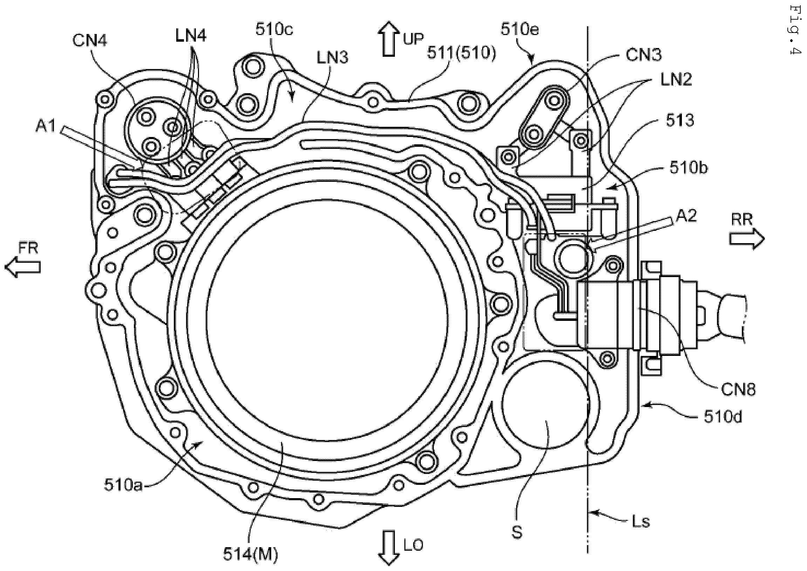

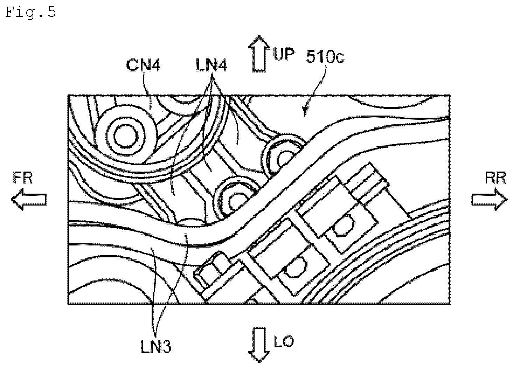

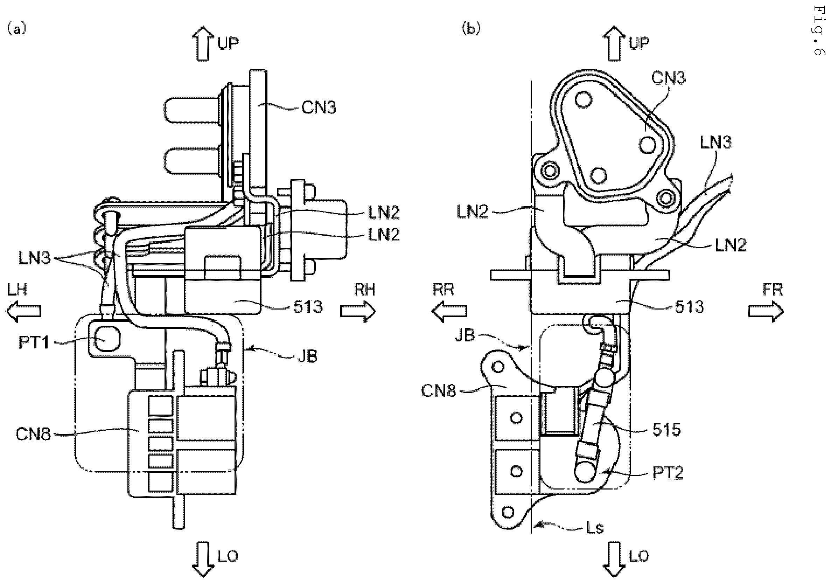

A description will be made on a routing form of each of the wires in the motor housing 510 with reference to FIG. 4 to FIG. 7. FIG. 5 is an enlarged view of section A1 in FIG. 4, and FIG. 6 includes enlarged views of section A2 in FIG. 4.

As illustrated in FIG. 4, an inner space of the motor housing 510 may comprise: a motor accommodation space 510a in which a stator 514 and a rotor (not illustrated) of the motor M are accommodated; a rear space 510b that is provided behind the motor accommodation space 510a; and an upper space 510c that is provided on top of the motor accommodation space 510a. Of the first motor housing 511 and the second motor housing 512 that constitute the motor housing 510, only the first motor housing 511 is illustrated in FIG. 4. However, the second motor housing 512 only needs to have at least the motor accommodation space 510a therein. In addition, FIG. 4 illustrates the rear space 510b and the upper space 510c in a state where a front side of the sheet is opened. However, in the actual first motor housing 511, the rear space 510b and the upper space 510c may each be closed by a wall except for connectors CN3, CN4.

A rear portion of the rear space 510b is defined by a rear wall portion (wall portion on the rear side) 510d. A DC connector (power supply connector) CN8 is disposed in an intermediate portion of the rear wall portion 510d in the up-down direction. A specific arrangement position of the DC connector CN8 in the up-down direction may be the same height position as a radial center (rotation axis) of the stator 514 and the rotor of the motor M. A power line that may extend from the battery 200 via the DC/DC converter 300 is connected to the DC connector CN8.

An upper portion of the upper space 510c may be defined by an upper wall portion 510e. The DC connector (DC connection portion) CN3 may be disposed in a rear portion of the upper space 510c. The AC connector (AC connection portion) CN4 may be disposed in a front portion of the upper space 510c. The DC connector CN3 and the AC connector CN4 may each be provided such that a terminal portion thereof protrudes leftward (the front side of the sheet of FIG. 4). The connectors CN3, CN4 may be provided for connection with the inverter 100.

As illustrated in FIGs. 6A and 6B, two DC bus bars (converter wires) LN2 may be connected to the DC connector CN3. The other end of each of the DC bus bars LN2 may be connected to the DC connector CN8. As illustrated in FIG. 6A, at a position between the DC connector CN3 and the DC connector CN8, the DC bus bars LN2 are routed to meander in the left-right direction. In particular, the DC bus bars LN2 are routed in a meandering or snake-like pattern in the vehicle width direction. The ferrite core (noise filter component) 513 may be inserted in portions of the DC bus bars LN2 that extend in the left-right direction. Just as described, the DC bus bars LN2 meander in the left-right direction, and the ferrite core 513 may be inserted in the intermediate portions thereof. In this way, compared to a case where such a form is adopted that each of the DC bus bars LN2 extends substantially linearly in the up-down direction, a vertical size of the motor housing 510 can be reduced.

In a portion between a position at which the ferrite core 513 may be inserted in the DC bus bars LN2 and a position at which the DC bus bars LN2 may be connected to the DC connector CN8, connection points PT1, PT2 of an auxiliary machine wire LN3 is provided. That is, in the portion between the position at which the ferrite core 513 may be inserted in the DC bus bars LN2 and the position at which the DC bus bars LN3 are connected to the DC connector CN8, the junction box (branch portion) JB for branching the auxiliary machine wire LN3 is provided. A fuse 515 may be inserted in the connection portion PT2 of the auxiliary machine wire LN3.

Here, as illustrated in FIG. 4, in a portion below a region where the DC bus bars LN2 are routed in the rear space 510b, a driveshaft (output shaft) S that is inserted through the motor housing 510 in the left-right direction may be arranged. An imaginary line Ls that extends in the up-down direction is drawn at a rear end of an outer periphery of the driveshaft S. In this case, as illustrated in FIG. 6B, the junction box JB may be arranged on the front side of the imaginary line Ls. That is, the junction box JB is provided at a position farther away from the rear wall portion 510d than from the imaginary line Ls. Here, the junction box JB may be located at the same position as the imaginary line Ls in the vehicle front-rear direction.

As illustrated in FIG. 4, the auxiliary machine wire LN3 that is branched by the junction box JB may be routed forward through the upper space 510c. A front end portion of the auxiliary machine wire LN3 may be connected to a connector (not illustrated) that is joined to the connector CN1 (see FIG. 2).

As illustrated in FIG. 5, three AC bus bars (motor connection wires) LN4 may be connected to the AC connector CN4. Each of the AC bus bars LN4 may be connected to the respective coil that is provided to the stator 514 (see FIG. 4) in the motor M.

Here, in the upper space 510c, a grade separated crossing of the auxiliary machine wires LN3 over the AC bus bars LN4 may be provided while electrical insulation is provided. The electrical insulation between the AC bus bars LN4 and the auxiliary machine wires LN3 may be achieved by adopting coated wires as the auxiliary machine wires LN3.

Although the second motor housing 512 is not illustrated in FIG. 4, the DC connector CN3 and the AC connector CN4 may be disposed in the first motor housing 511. In addition, the DC bus bars LN2, the AC bus bars LN4, and the auxiliary machine wires LN3 may be accommodated in an inner space of the first motor housing 511.

### 5. Conductive Portions of DC bus bar LN2 and Auxiliary Machine Wire LN3

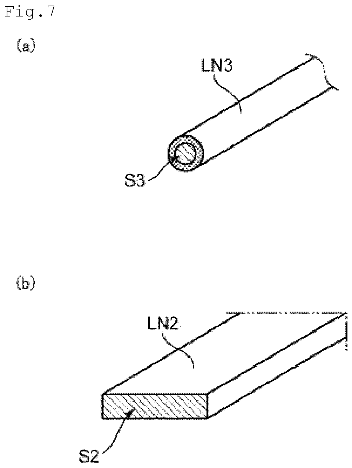

A description will be made on a transverse cross-sectional area of a conductive portion of each of the DC bus bar LN2 and the auxiliary machine wire LN3 with reference to FIGs. 7A and 7B.

As illustrated in FIG. 7A, in the transverse cross section that is orthogonal to a longitudinal direction, the conductive portion of the auxiliary machine wire LN3 may have a cross-sectional area S3.

Meanwhile, as illustrated in FIG. 7B, in the transverse cross section that is orthogonal to the longitudinal direction, the DC bus bar LN2 may have a cross-sectional area S2.

The auxiliary machine wire LN3 may be formed such that the cross-sectional area S3 of the conductive portion of the auxiliary machine wire LN3 is smaller than the cross-sectional area S2 of the DC bus bar LN2.

The DC connector CN3 and the DC connector CN8 may be connected by the DC bus bar LN2. However, it is also possible to connect the DC connector CN3 and the DC connector CN8 by a wire that is made of a coated wire. In this case, the auxiliary machine wire LN3 only needs to be formed such that the cross-sectional area S3 of the conductive portion of the auxiliary wire LN3 is smaller than a cross-sectional area of a conductive portion of the converter wire.

### 6. Structure and Arrangement of Inverter 100

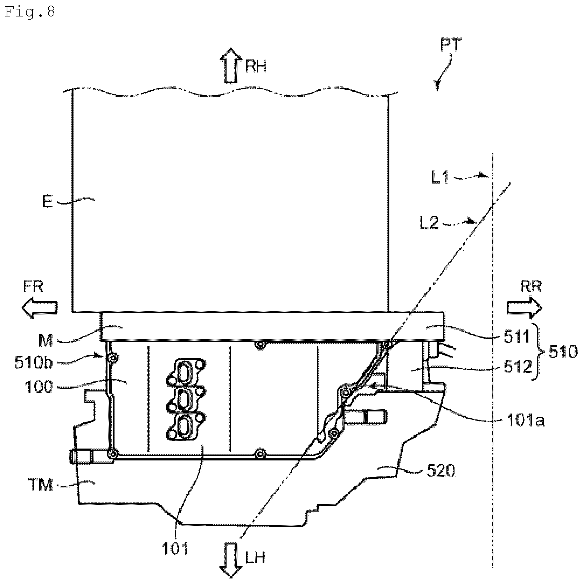

A description will be made on a structure and arrangement of the inverter 100 with reference to FIG. 8 to FIG. 10.

As illustrated in FIG. 8, in the front-rear direction of the vehicle V, the inverter housing 101 that constitutes an outer shell of the inverter 100 may be formed such that a rear end portion 101a is flush with a rear end portion of any of the first motor housing 511, the second motor housing 512, and the axle housing 520 or may be arranged in front of the rear end portion of any of the first motor housing 511, the second motor housing 512, and the axle housing 520. More specifically, the rear end portion 101a of the inverter housing 101 may be arranged in front of any of the first motor housing 511, the second motor housing 512, and the axle housing 520.

In addition, in the front-rear direction of the vehicle V, a front end portion 101b of the inverter housing 101 may be flush with a front end portion of any of the first motor housing 511, the second motor housing 512, and the axle housing 520, or may be arranged behind a rear end portion of any of the first motor housing 511, the second motor housing 512, and the axle housing 520. More specifically, the front end portion 101b of the inverter housing 101 may be arranged at a position behind the front end portion of the first motor housing 511 and the front end portion of the axle housing 520. In addition, the front end portion 101b of the inverter housing 101 may be arranged at a position that is substantially flush with the front end portion of the second motor housing 512.

Furthermore, in the plan view from above, the rear end portion 101a of the inverter housing 101 may be formed in a tapered shape such that a width thereof is gradually reduced from the left side (outer side) to the right side (inner side) in the vehicle width direction from the front side toward the rear side. That is, in the case where an imaginary line L2 is drawn along a rear end surface of the rear end portion 101a of the inverter housing 101, and an imaginary line L1 is drawn along the vehicle width direction, the rear end portion 101a of the inverter housing 101 may be formed in such a shape that the imaginary line L2 intersects the imaginary line L1 at an angle of less than 90° (acute angle).

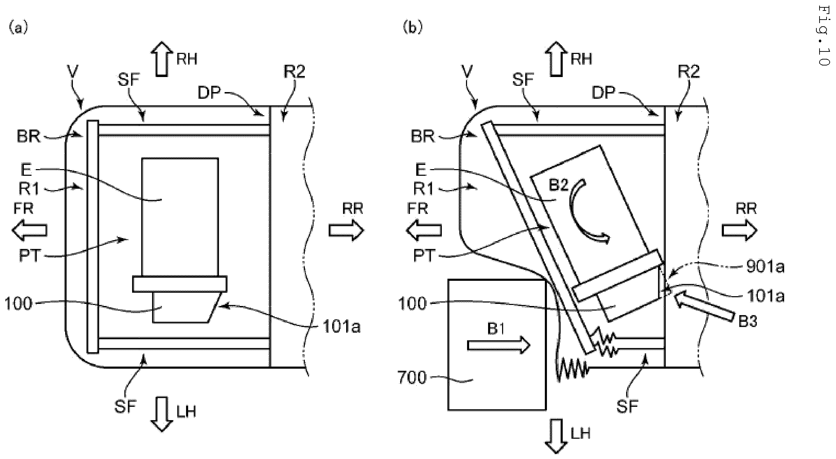

As described above, since the rear end portion 101a of the inverter housing 101 may be formed in the tapered shape as described above, the collision of the inverter housing 101 with the peripheral portion (such as the dashboard DP) is suppressed even during the vehicle collision. More specifically, as illustrated in FIG. 10A, in the vehicle V, the powertrain PT is mounted in the powertrain room R1 that is provided in the front portion. In FIG. 10A and FIG. 10B, only the engine E and the inverter 100 of the powertrain PT are illustrated.

In the vehicle V, the inverter 100 may be arranged on the left side of the engine E in the powertrain room R1. Then, the inverter 100 may be arranged such that the rear end portion 101a of the inverter housing 101 is located on the vehicle rear side.

Around the powertrain PT, which is mounted in the powertrain room R1, a bumper reinforcement BR may be disposed on the front side, and a front side frame SF may be disposed on each lateral side. The bumper reinforcement BR may be disposed to extend in the vehicle width direction, and the front side frame SF may be disposed such that a front end thereof is coupled to the bumper reinforcement BR and extends rearward from the coupled portion.

As illustrated in FIG. 10B, in the case where the offset collision of the vehicle V is assumed, a collision object (obstacle) 700 enters the powertrain room R1 as indicated by an arrow B1. In this case, a left portion of the bumper reinforcement BR is pushed rearward. Consequently, a part of the left front side frame SF is deformed by buckling or the like and thereby absorbs an impact force. In addition, in this case, the powertrain PT rotates leftward as indicated by an arrow B2 in the plan view from above.

As illustrated in FIG. 10B, in the case where the powertrain PT rotates as indicated by the arrow B2 due to the offset collision, the rear end portion 101a of the inverter housing 101 approaches the cabin R2 side.

Here, in a comparative example in which, unlike the present embodiment, a rear end portion 901 of an inverter housing is not formed in a tapered shape, it is considered that the rear end portion 901a collides with the dashboard DP. In contrast, in an aspect of the present disclosure, since the rear end portion 101a of the inverter housing 101 may be formed in the tapered shape as described above, the collision of the rear end portion 101a with the dashboard DP is avoided.

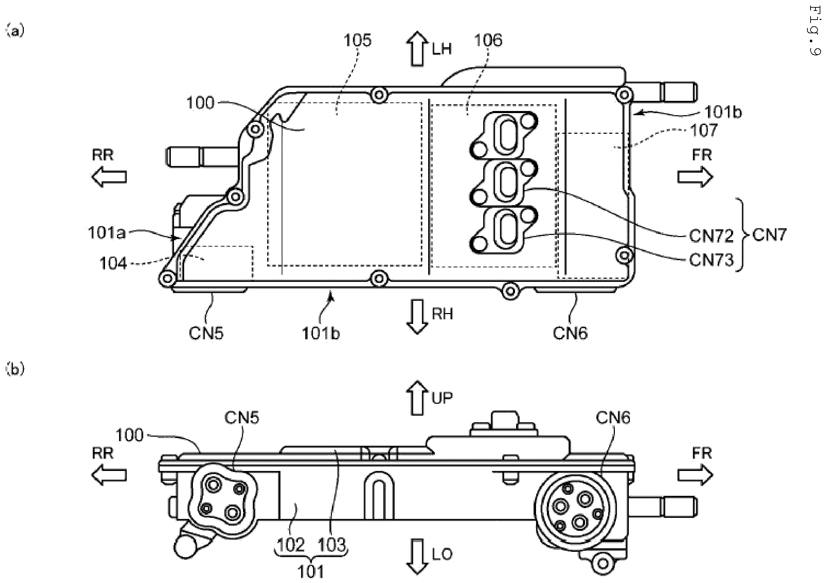

Next, as illustrated in FIG. 9A, the inverter housing 101 of the inverter 100 may be configured by combining a housing body portion 102 and a lid 103. The housing body portion 102 may have an opening on top thereof, and the lid 103 may close the opening of the housing body portion 102. The housing body portion 102 and the lid 103 may each be formed by using the conductive material (for example, the metallic material or the carbon fiber reinforced resin).

As illustrated in FIGs. 9A and 9B, in a right wall portion of the housing body portion 102, a DC connector CN5 may be provided in a rear portion, and an AC connector CN6 may be disposed in a front portion. The DC connector CN5 may be joined to the DC connector CN3 (see FIG. 4) that is provided in the first motor housing 511. The AC connector CN6 may be joined to the AC connector CN4 (see FIG. 4) that is provided in the first motor housing 511. The DC connector CN5 and the DC connector CN3 may be joined to each other, and the AC connector CN6 and the AC connector CN4 may be joined to each other by horizontally and slidingly moving the inverter housing 101 toward the first motor housing 511 on the right side.

The lid 103 may be provided with plural (three as an example in the present embodiment) PCM connectors CN71 to CN73 (hereinafter, collectively described as PCM connectors CN7) in a manner to protrude upward. These PCM connectors CN7 are connectors for connecting the PCM 400 to the inverter 100.

As illustrated in FIG. 9A, the inverter 100 may include, in the inverter housing 101, a DC input/output unit 104, a smoothing unit 105, a power module unit 106, and an AC input/output unit 107 that are sequentially accommodated in a direction from the rear end portion 101a side toward the front end portion 101b side. The DC input/output unit 104 may be accommodated in the rear end portion 101a, which is formed in the tapered shape, in the inverter housing 101.

The smoothing unit 105 may be configured to include a smoothing capacitor such as a film capacitor or an electrolytic capacitor. An X capacitor may be disposed in the smoothing unit 105.

The power module unit 106 may be configured by an insulated gate bipolar transistor (IGBT). Here, the power module unit 106 does not always have to be configured by the IGBT, and may be configured by a known power module such as a metal oxide semiconductor field effect transistor (MOSFET) .

The DC connector CN5 may be configured as a part of the DC input/output unit 104, and the AC connector CN6 may be configured as a part of the AC input/output unit 107.

Although a detailed description is not made, the inverter housing 101 is also provided with a refrigerant circulation path for cooling the smoothing unit 105 and the power module unit 106.

### 7. Effects

In the structure adopted for the powertrain PT of the vehicle V according to the present invention, the powertrain PT is mounted in the powertrain room R1, which is provided in the front portion of the vehicle V, and the DC connector (power supply connector) CN8 is disposed in the rear wall portion of the drive system housing 500 (more specifically, the rear wall portion 510d of the motor housing 510). Accordingly, even when the obstacle 700 enters the powertrain room R1 of the vehicle V during a frontal collision of the vehicle V, it is possible to suppress the DC connector CN8 from being damaged by the obstacle 700, the member of the vehicle V that is pushed by the obstacle and moves rearward, or the like. That is, the motor housing 510, which accommodates the stator 514, the rotor, and the like of the motor M, has relatively high rigidity, and thus functions as a protection member that protects the DC connector CN8 during the frontal collision.

In the structure adopted for the powertrain PT of the vehicle V according to the present invention, the DC bus bar (converter wire) LN2 and the auxiliary machine wire LN3 are accommodated in the drive system housing 500, and the junction box (branch portion) JB is arranged in the portion (rear space 510b) behind the motor M in the motor housing 510. Accordingly, even during the frontal collision of the vehicle V, the drive system housing and the motor (stator and rotor) function as the protection members that protect the DC bus bar LN2, the auxiliary machine wire LN3, and the junction box JB.

Thus, the structure adopted for the powertrain PT of the vehicle V according to the present invention can ensure the safety during the vehicle collision. In addition, compared to the case where the DC bus bar LN2, the auxiliary machine wire LN3, and the junction box JB are provided outside the drive system housing 500, it is possible to reduce the necessity of securing a space for preventing the damage thereto due to the collision with the peripheral member or a vehicle body or a space for arranging the protector therefore.

In the present invention, the drive system housing 500 and the inverter housing 101 are closely joined to each other. In this case, "closely joined" indicates that, even in the case where a minute clearance is provided in the joined portion between the drive system housing 500 and the inverter housing 101, the electromagnetic wave does not enter/exit through the clearance.

In the structure adopted for the powertrain PT of the vehicle V according to another embodiment of the present disclosure, since the auxiliary machine wire LN3 may be formed such that the cross-sectional area S3 of the conductive portion in the auxiliary machine wire LN3 is smaller than the cross-sectional area S2 of the DC bus bar LN2, it is possible to reduce an occupied space in a case where the auxiliary machine wire LN3 is routed in the motor housing 510. Thus, it is possible to suppress the drive system housing 500, which includes the motor housing 510, from being unnecessarily enlarged.

In the structure adopted for the powertrain PT of the vehicle V according to another embodiment of the present disclosure, since the battery 200 may be mounted under the floor of the cabin R2, which is arranged on the rear side of the powertrain room R1, in which the powertrain PT is mounted, in the vehicle V, it is possible to reduce a length of the wire for connecting the battery 200 to the DC connector CN8, which is disposed in the rear wall portion 510d of the motor housing 510. Thus, it is possible to suppress electrical resistance between the battery 200 and the inverter 100 and between the battery 200 and the electric compressor C to be small.

In addition, since it is possible to suppress the length of the wire for connecting the DC connector CN8 and the battery 200, it is possible to reduce a space for routing the wire and to cut manufacturing cost.

In the structure adopted for the powertrain PT of the vehicle V according to another aspect of the present disclosure, since the junction box JB may be arranged near the driveshaft (output shaft) S and may be arranged in front of the rear end of the driveshaft S in the front-rear direction, it is possible to suppress the junction box JB from being damaged by the rear wall portion 510d of the motor housing 510 and the peripheral member during the frontal collision of the vehicle V. That is, since the driveshaft S has the relatively high rigidity, the driveshaft S functions as the protection member that protects the junction box JB during the frontal collision.

In the structure adopted for the powertrain PT of the vehicle V according to another embodiment of the present disclosure, the inverter housing 101 may be placed on the second motor housing (the other housing element) 512 having a small diameter, and may be arranged to be adjacent to the first motor housing (the one housing element) having a large diameter in the vehicle width direction. Accordingly, the inverter housing 101 may be arranged by using the step portion between the first motor housing 511 and the second motor housing 512 having the different diameter sizes. Thus, in the structure adopted for the powertrain PT of the vehicle V, it is possible to suppress enlargement of the entire powertrain PT by effective use of the space.

In the structure adopted for the powertrain PT of the vehicle V according to another embodiment of the present disclosure, the auxiliary machine wire LN3 may extend forward in the first motor housing 511, and the grade separated crossing of the auxiliary machine wire LN3 over the AC bus bar (motor connection wire) LN4 may be provided while the electrical insulation is provided. Accordingly, in the structure adopted for the powertrain PT of the vehicle V, since the junction box JB is arranged on the rear side, the junction box JB can be protected during the frontal collision, and the auxiliary machine wire LN3 can be routed to the front side of the AC bus bar LN4 by the grade separated crossing thereof over the AC bus bar LN4. Thus, in the structure adopted for the powertrain PT of the vehicle V, the auxiliary machine wire LN3 can be routed to the front side of the AC bus bar LN4 with the high degree of freedom while the junction box JB is protected.

In the structure adopted for the powertrain PT of the vehicle V according to another embodiment of the present disclosure, since the auxiliary machine wire LN3 may be configured by the coated wire, it is possible to route the auxiliary machine wire LN3 with the high degree of freedom in terms of a layout while a short circuit with the other member in the motor housing 510 is prevented.

In the structure adopted for the powertrain PT of the vehicle V according to another embodiment of the present disclosure, since the ferrite core (noise filter component) 513 may be inserted in the DC bus bar (converter wire) LN2, it is possible to prevent leakage of the noise generated by the inverter 100 to the wire on the DC connector CN8 side from the portion, in which the ferrite core 513 is inserted, in the DC bus bar LN2 and on the battery 200 side from the DC connector CN8 (an EMI measure). In addition, also in the case where the noise is transmitted from another device to the wire, which is routed from the battery 200 to the DC connector CN8, interference of the noise with driving of the inverter 100 is prevented (an EMS measure).

In the structure adopted for the powertrain PT of the vehicle V according to another embodiment of the present disclosure, since the DC bus bar (converter wire) LN2 may be accommodated in the motor housing 510 that is formed of the conductive material, it is possible to prevent radiation of the electromagnetic wave from the inverter 100 side of the portion, in which the ferrite core 513 may be inserted, in the DC bus bar LN2 to the outside of the motor housing 510, and to prevent the interference of the electromagnetic wave from the outside of the motor housing 510 with the DC bus bar LN2. In this way, the EMS measure is taken.

Furthermore, in the structure adopted for the powertrain PT of the vehicle V according to another embodiment of the present disclosure, since the ferrite core 513 may be inserted on the inverter 100 side from the junction box JB, in which the auxiliary machine wire LN3 is branched, it is possible to prevent the noise generated by the inverter 100 from being transmitted to the auxiliary machine wire LN3. In addition, since the auxiliary machine wire LN3 is also accommodated in the motor housing 510, it is also possible to prevent the noise of the other device from being transmitted to the auxiliary machine wire LN3 from the outside of the housing 510. Thus, in the structure adopted for the powertrain PT of the vehicle V, it is possible to protect the DC connector CN8 and the junction box JB during the frontal collision and establish the EMC measure at the same time.

As it has been described so far, the structure adopted for the powertrain PT of the vehicle V according to the present invention and the presented embodiments can ensure the safety during the collision of the vehicle V.

### [Modified Examples]

According to one embodiment of the present disclosure, such a configuration is adopted that the drive system housing 500 and the inverter housing 101 are separate members and are closely joined to each other. However, it is also possible to adopt a configuration that the drive system housing 500 and the inverter housing 101 are integrated. That is, a configuration may be adopted that the converter housing is not provided separately from the drive system housing, that a part of the drive system housing has an outwardly bulging portion, and that components of the power converter are accommodated in the bulging portion. In this case, in terms of the configuration of the power converter, it is not always necessary that the components are densely arranged in the space inside the drive system housing, and the components may separately be arranged in the housing space.

In the above description, the inverter 100 is adopted as the example of the power converter. However, in the invention, a device other than the inverter may be adopted as the power converter. For example, a DC/DC converter may be adopted as the power converter.

According to one embodiment of the present invention, the cross-sectional area (transverse cross-sectional area) S3 of the conductive portion in the auxiliary machine wire LN3 may be smaller than the cross-sectional area (transverse cross-sectional area) S2 of the DC bus bar LN2. However, the cross-sectional area of the conductive portion in the auxiliary machine wire may be the same or larger than the cross-sectional area of the conductive portion in the converter wire.

The auxiliary machine wire LN3 may be configured by the coated wire, and the converter wire is configured by the bus bar. However, the invention is not limited thereto. For example, the auxiliary machine wire may be configured by the bus bar, and the converter wire may be configured by the coated wire.

According to an embodiment, the configuration is adopted that the battery 200 may be mounted under the floor of the cabin R2. However, in the invention, the arrangement of the battery is not limited thereto. For example, the battery may be mounted in the powertrain room, or the battery may be mounted under a floor of a baggage compartment behind the cabin.

According to an embodiment, the configuration is adopted that the driveshaft S may be inserted through the motor housing 510 in the vehicle width direction. However, the invention is not limited thereto. For example, it is also possible to adopt a configuration that the output shaft is disposed behind the motor housing.

According to an embodiment, the configuration is adopted that the inverter housing 101 may be placed on the second motor housing 512. However, the invention is not limited thereto. For example, it is also possible to arrange the converter housing behind the drive system housing or to arrange the converter housing on the side of the drive system housing.

According to one embodiment, the configuration is adopted that the grade separated crossing of the auxiliary machine wire LN3 over the AC bus bar LN4 may be provided. However, in the invention, it is not always necessary to provide the grade separated crossing between the AC bus bar LN4 and the auxiliary machine wire LN3. For example, the auxiliary machine wire LN3 may pass a position above the AC bus bar LN4 and the AC connector CN4.

In the above description, the ferrite core 513 may be adopted as the example of the noise filter component. However, it is also possible to adopt a noise filter component other than the ferrite core. For example, a choke coil, a Y capacitor, or the like can be adopted as the noise filter component.

In the above description, the configuration is adopted that the ferrite core 513 may be accommodated not in the inverter housing 101 but in the motor housing 510. However, it is also possible to adopt a configuration that the noise filter component may be accommodated in the converter housing.

The wires may be connected by joining the socket-type connectors CN1 to CN8. However, it is not always necessary to connect the wires by using the socket-type connector. For example, the wires may be connected to each other by fastening the terminals with a fastening member.

According to one embodiment of the present disclosure, the rear end portion 101a of the inverter housing 101 may be formed in the tapered shape. However, it is not always necessary to form the rear end portion of the converter housing in the tapered shape. In relation to the drive system housing, as long as the collision of the converter housing with the peripheral component (such as the dashboard DP) is avoided even during the frontal collision or the offset collision, the shape of the rear end portion of the converter housing is not limited.

According to one embodiment of the present disclosure, the connectors CN3, CN4, CN5, CN6 may be joined by slidingly moving the inverter housing 101 with respect to the motor housing 510 in the vehicle width direction. However, the invention is not limited thereto. For example, a configuration may be adopted that the connectors are joined to each other in the up-down direction, the converter housing may be assembled to the drive system housing from above, and the housings may be joined to each other by using the fastening member.

In the above description, the inverter housing 101 and the axle housing 520 may be fixed via the bracket 530. However, the invention is not limited thereto. For example, the connectors to be joined can be further screwed together, or the converter housing may directly be fixed to the drive system housing.

In the above description, the electric compressor C of the air conditioner may be adopted as the example of the auxiliary machine. However, the invention is not limited thereto. For example, a refrigerant pump that circulates a refrigerant for cooling the powertrain PT can also be adopted as the auxiliary machine.

In the above description, the power line harness LN1 that extends from the connector CN1 provided to the motor housing 510 may be routed to pass through the position in front of the cylinder block 501. However, the invention is not limited thereto. For example, it is also possible to route the power line harness LN1 in a manner to pass through the cylinder block 501 or the cylinder head 502.

### [Reference Signs List]

- 100: inverter (power converter)
- 101: converter housing
- 101a: rear end portion of converter housing
- 101b: front end portion of converter housing
- 200: battery
- 500: drive system housing
- 510: motor housing
- 510b: rear space
- 510d: rear wall portion (wall portion on rear side)
- 511: first motor housing (one housing element)
- 512: second motor housing (the other housing element)
- 513: ferrite core(noise filter component)
- 520: axle housing
- BR: bumper reinforcement
- C: electric compressor (auxiliary machine)
- CN3: DC connector (DC connection portion)
- CN4: AC connector (AC connection portion)
- CN5: DC connector
- CN6: AC connector
- CN8: DC connector (power supply connector)
- JB: junction box (branch portion)
- LN2: DC bus bar (converter wire)
- LN3: auxiliary machine wire
- LN4: AC bus bar (motor connection wire)
- M: motor
- PT: powertrain
- R1: powertrain room
- S: Driveshaft (output shaft)
- S2: cross-sectional area of conductive portion of converter wire
- S3: cross-sectional area of conductive portion of auxiliary wire
- SF: front side frame
- TM: transmission
- V: vehicle
- W: wheels

## Claims

1. A vehicle powertrain structure comprising:
a drive system to be mounted in a front portion of a vehicle (V) and having a motor (M) and a drive system housing (500), the motor (M) being a drive source for travel of the vehicle (V), and the drive system housing (500) at least accommodating the motor (M);
a battery (200) as a power source of the motor (M); and
a power converter (100) that is mounted in the front portion of the vehicle (V) and has a circuit section and a converter housing (101), the circuit section converting electric power between the motor (M) and the battery (200), and the converter housing (101) accommodating the circuit section, wherein
an auxiliary machine (C) that is actuated by the electric power from the battery (200) is mounted on the vehicle (V),
the converter housing (101) is closely joined to the drive system housing (500) or integrally provided with the drive system housing (500),
a power supply connector (CN8), to which a wire extending from the battery (200) is connected, is disposed in a rear wall portion (510d) of the drive system housing (500),
a converter wire (LN2) and an auxiliary machine wire (LN3) are accommodated in the drive system housing (500), the converter wire (LN2) connecting the power supply connector (CN8) and the circuit section, and the auxiliary machine wire (LN3) connecting between the power supply connector (CN8) and the auxiliary machine (C), and
a branch portion (JB) in which the auxiliary machine wire (LN3) is branched from the converter wire (LN2) is arranged in a portion of the drive system housing (500) behind the motor (M) .

2. The vehicle powertrain structure according to claim 1, wherein
the auxiliary machine wire (LN3) is formed such that a transverse cross-sectional area (S3) of a conductive portion is smaller than a transverse cross-sectional area (S2) of a conductive portion of the converter wire (LN2).

3. The vehicle powertrain structure according to claims 1 or 2, wherein
the battery (200) is mounted on a rear side of the drive system in the vehicle (V).

4. The vehicle powertrain structure according to any one of claims 1 to 3, wherein
the vehicle (V) includes an output shaft (S) that transmits a driving force for travel output from a powertrain (PT) including the motor (M) to wheels (W),
the output shaft (S) is disposed to be inserted through a portion behind the motor (M) in the drive system housing in a vehicle width direction, and
said branch portion (JB) is arranged (a) between front and rear ends of the output shaft (S) and/or (b) between the middle part and the rear part of the output shaft (S) and/or (c) at a position near the output shaft, and/or (d) is arranged at the same position as a rear end of an outer periphery of the output shaft in a front-rear direction or on a front side of the rear end.

5. The vehicle powertrain structure according to any one of claim 1 to claim 4, wherein
a portion (510), in which the motor (M) is accommodated, in the drive system housing (500) is configured to have two housing elements (511, 512), each of which has a dish or concave shape, and to join opening edges of the two housing elements (511, 512),
in a direction orthogonal to a rotational shaft of the motor (M), one housing element (511) of the two housing elements (511, 512) is formed to have a larger diameter than the other housing element (512), and
the converter housing (101) is separately provided from the drive system housing (500), is adjacent to the one housing element (511) in the vehicle width direction, and is placed on the other housing element (512).

6. The vehicle powertrain structure according to claim 5, wherein
a DC connection portion (CN3) with the power converter (100) is provided in a rear portion of the one housing element (511), an AC connection portion (CN4) with the power converter (100) is provided in a front portion thereof, and a motor connection wire (LN4) for connecting the AC connection portion (CN4) and the motor (M) is accommodated in an inner space, and
the auxiliary machine wire (LN3) extends forward from the branch portion (JB) through the one housing element (511), and is routed to provide a grade separated crossing over the motor connection wire (LN4) while being electrically insulated.

7. The vehicle powertrain structure according to any one of claims 1 to 6, wherein
the auxiliary machine wire (LN3) is formed of a coated wire.

8. The vehicle powertrain structure according to any one of claim 1 to claim 7, wherein
the drive system housing (500) and the converter housing (101) are each formed by using a conductive and/or electromagnetically shielding material, and
a noise filter component (513) is inserted in a portion on a side of the circuit section from the branch portion (JB) in the converter wire (LN2).

9. The vehicle powertrain structure according to any one of claims 1 to 8, wherein
the converter wire (LN2) is routed in a meandering pattern in the vehicle width direction.

10. The vehicle powertrain structure according to any one of claims 1 to 9, further comprising
a bumper reinforcement (BR) disposed on a front side of a powertrain room (R1) extending in the vehicle width direction, and
a front side frame (SF) disposed on each lateral side of the powertrain room (R1) connected to said bumper reinforcement (BR).

11. The vehicle powertrain structure according to any one of claims 1 to 10, further comprising
an axle housing (520) accommodating a transmission (TM), wherein
a front end portion (101b) of the converter housing (101) is arranged at a position behind a front end portion of the one housing element (511) and a front end portion of the axle housing (520), and
the front end portion (101b) of the converter housing (101) is arranged at a position that is substantially flush with the front end portion of the other housing element (512) .

12. The vehicle powertrain structure according to any one of claims 1 to 11 , wherein
a rear end portion (101a) of the converter housing (101) in a vehicle front-rear direction is formed in a tapered shape.

13. The vehicle powertrain structure according to any one of claims 1 to 12, wherein
the converter housing (101) comprises a DC connector (CN5) in a rear portion and an AC connector (CN6) in a front portion thereof; and
the connectors (CN3,CN4,CN5,CN6) are joined by slidingly moving the converter housing (101) with respect to the motor housing (510) in the vehicle width direction.

14. The vehicle powertrain structure according to any one of the preceding claims, wherein
the auxiliary machine (C) is located on the front side of a drive system housing (500).

15. A vehicle (V) comprising a vehicle powertrain structure according to any one of claims 1 to 14.
